# EUROPÄISCHE PATENTSCHRIFT

(11) **EP 2 931 533 B1**
(45) Veröffentlichungstag und Bekanntmachung des Hinweises auf die Patenterteilung: **18.01.2017**
(21) Anmeldenummer: 13759538.5
(22) Anmeldetag: 11.09.2013
(51) Int. Cl.: B60C 9/20

(54) **FAHRZEUGLUFTREIFEN**
PNEUMATIC VEHICLE TYRE
PNEUMATIQUE DE VÉHICULE

(30) Priorität: 17.12.2012 DE 102012112452
(43) Veröffentlichungstag der Anmeldung: 21.10.2015
(73) Patentinhaber: Continental Reifen Deutschland GmbH, 30165 Hannover (DE)
(72) Erfinder: KLEFFMANN, Jens, 30453 Hannover (DE); SCHRAMM, Joachim, 38112 Braunschweig (DE); JOHN, Jacob, 30171 Hannover (DE)
(74) Vertreter: Finger, Karsten
(86) Internationale Anmeldenummer: PCT/EP2013/068806
(87) Internationale Veröffentlichungsnummer: WO 2014/095100

(56) Entgegenhaltungen:
- DE-A1- 3 327 670
- JP-A- S5 977 906
- US-A- 5 111 864
- US-A1- 2004 144 469
- US-A1- 2005 173 042

## Beschreibung

Die Erfindung betrifft einen Fahrzeugluftreifen in Radialbauart für Lastkraftwagen oder Omnibusse mit einem wenigstens vierlagigen Gürtel, wobei jede Gürtellage als Festigkeitsträger Stahlcorde enthält, die in jeder Gürtellage jeweils parallel zueinander verlaufen, wobei die Neigung der Stahlcorde zur Umfangsrichtung (A-A) beginnend bei der ersten, radial innersten Gürtellage, der Abfolge Rechts-Rechts-Links-Rechts oder Rechts-Rechts-Links-Links folgt und der Winkel (α), den die Stahlcorde in der ersten Gürtellage mit der Umfangsrichtung (A-A) einschließen, zwischen 45° und 70° beträgt, die Winkel (β, γ), welche die Stahlcorde in der zweiten Gürtellage und in der dritten Gürtellage mit der Umfangsrichtung (A-A) einschließen, jeweils zwischen 15° und 32° betragen, die Winkel (δ), welche die Stahlcorde in der vierten Gürtellage mit der Umfangsrichtung (A-A) einschließen, zwischen 15° und 32° betragen, wobei die vierte Gürtellage schmaler ausgebildet ist als die anderen drei Gürtellagen, und mit einem radial außerhalb des Gürtels ausgebildeten Laufstreifen mit einer in axialer Richtung A gemessenen Laufstreifenbreite B.

Derartige Nutzfahrzeugreifen sind bekannt. Die Ausbildung von Nutzfahrzeugreifen mit ihrer 4-Lagen-Gürtelausbildung hat sich für verschiedene Einsätze als besonders vorteilhaft herausgestellt. Allerdings ermöglicht die Ausbildung während des Fahrens noch unerwünscht starke Verformungen des Reifens und der Reifenseitenwand im Bereich der Reifenschulter, wodurch der Rollwiderstand noch unerwünscht beeinträchtigt wird.

Aus der US 6,598,639 B2 ist ein Nutzfahrzeugreifen mit 5-Lagen-Gürtel bekannt, bei dem zwischen erster und zweiter Gürtellage und zwischen zweiter und dritter Gürtellage jeweils zusätzliche Verstärkungsstreifen im Bereich der Reifenschulter ausgebildet sind, welche von der oberen Gürtellage überlappt werden. Hierdurch kann zwar im gewissen Umfang eine Versteifung des Gürtelrandbereiches erzielt werden, was sich auch zugunsten des Rollwiderstandes auswirken kann. Allerdings sind die Streifen voneinander entkoppelt, wodurch ihre versteifende Wirkung reduziert wird. Durch die in radialer Richtung weit voneinander beabstandete Anordnung mit axialer Überlappung durch die äußere Gürtellage wird über einen axialen Erstreckungsabschnitt im äußeren Gürtelrandbereich eine Ausbildung mit 7 übereinander angeordneten Gürtellagen wirksam. Eine derartige Verdickung des Gürtels beeinträchtigt die Abschleifbarkeit im Prozess für die Runderneuerung.

Auch aus der US 2004/01444469 A1 sowie aus der US 5,111,864 ist es ebenfalls jeweils bekannt, zusätzliche Streifen im Bereich der Gürtelkanten auszubilden, welche von der oberen Gürtellage zusätzlich überlappt werden. Bei all diesen Ausbildungen wird - soweit sie wirkliche Reduktionen des Rollwiderstandes mit sich brächten -, die Runderneuerungsfähigkeit durch die massive abschnittseise Erhöhung von Gürtellagen erschwert.

Aus der DE 33 276 70 A1 sind Schulterabdeckstreifen bekannt, die mit textilem Werkstoff aus Polyester oder Polyamid verstärkt sind. Aus der JP S5977906 A ist es bekannt, im Schulterbereich des Reifens zwischen zwei Gürtellagen einen einzelnen Abdeckstreifen anzuordnen.

Der Erfindung liegt die Aufgabe zugrunde in einfacher Weise einen derartigen Nutzfahrzeugreifen mit wenigstens vier Gürtellagen mit Festigkeitsträgern aus Stahl mit verbessertem Rollwiderstand auszubilden bei Beibehalt guter Abschleifbarkeit im Prozess für die Runderneuerung.

Die Aufgabe wird erfindungsgemäß durch die Ausbildung eines Fahrzeugluftreifens in Radialbauart für Lastkraftwagen oder Omnibusse mit einem wenigstens vierlagigen Gürtel, wobei jede Gürtellage als Festigkeitsträger Stahlcorde enthält, die in jeder Gürtellage jeweils parallel zueinander verlaufen, wobei die Neigung der Stahlcorde zur Umfangsrichtung (A-A) beginnend bei der ersten, radial innersten Gürtellage, der Abfolge Rechts-Rechts-Links-Rechts oder Rechts-Rechts-Links-Links folgt und der Winkel (α), den die Stahlcorde in der ersten Gürtellage mit der Umfangsrichtung (A-A) einschließen, jeweils zwischen 15° und 32° betragen, die Winkel (δ), welche die Stahlcorde in der vierten Gürtellage mit der Umfangsrichtung (A-A) einschließen, zwischen 15° und 32° betragen, wobei die vierte Gürtellage schmaler ausgebildet ist als die anderen drei Gürtellagen, und mit einem radial außerhalb des Gürtels ausgebildeten Laufstreifen mit einer in axialer Richtung A gemessenen Laufstreifenbreite B, gemäß den Merkmalen von Anspruch 1 gelöst, bei dem zwischen zweiter und dritter Gürtellage beiderseits in einer axialen Position außerhalb des axialen Erstreckungsbereichs der vierten Gürtellage jeweils zwei in radialer Richtung mit Berührkontakt zueinander übereinander angeordnete Schulterabdeckstreifen angeordnet sind, in denen jeweils als Festigkeitsträger Stahlkorde parallel zu einander verlaufen, wobei die Stahlkorde des einen Schulterabdeckstreifen zu denen des anderen Schulterabdeckstreifen sowie zu den Stahlkorden der unmittelbar radial benachbarten Gürtellage in Kreuzanordnung verlaufend angeordnet sind und wobei die Stahlkorden des ersten, radial inneren Schulterabdeckstreifens mit der Umfangsrichtung einen Winkel ε und die Stahlkorden des zweiten, radial äußeren Schulterabdeckstreifens einen Winkel ζ einschließen mit ε<β und mit ζ<γ.

Durch diese Ausbildung wird ermöglicht, dass in dem Bereich der Reifenschulter der Reifen und die Reifenseitenwand mit Hilfe einer gekoppelt miteinander verbunden Schräggürtellagen mit Kreuzanordnung der Schulterabdeckstreifen und der benachbarten Gürtellagen, wobei die Festigkeitsträger eines jeden Schulterabdeckstreifens jeweils mit kleinerem Neigungswinkel als der Festigkeitsträger der unmittelbar benachbarten Gürtellage ausgebildet ist, in Umfangsrichtung zuverlässig versteift wird. Der äußere Reifen wird im Schulterbereich hierdurch weniger verformungsanfällig, wodurch der Rollwiderstand deutlich reduziert werden kann. Gleichzeitig wird durch die Anordnung der Schulterabdeckstreifen in axialer Position außerhalb der äußeren Gürtellage eine relativ gleichmäßige Materialverteilung im Gürtel bis in den Schulterbereich hinein ermöglicht, wodurch die Abschleifbarkeit für die Runderneuerung und somit die Runderneuerbarkeit erleichtert werden kann.

Besonders vorteilhaft ist die Ausbildung eines Fahrzeugluftreifens gemäß den Merkmalen von Anspruch 2, wobei die beiden Schulterabdeckstreifen mit axialem Versatz zu einander angeordnet sind. Hierdurch kann die Wahrscheinlichkeit von Ablösungen am Kordende weiter reduziert werden, wodurch die Einsatztauglichkeit der Karkasse für eine Runderneuerung erhöht wird.

Besonders vorteilhaft ist die Ausbildung eines Fahrzeugluftreifens gemäß den Merkmalen von Anspruch 3, wobei ε mit (β-15°)≤ε≤(β-2°) - insbesondere mit (β-10°)≤ε≤(β-4°) - ausgebildet ist. Hiermit kann eine besonders gute Rollwiderstandsoptimierung umgesetzt werden.

Besonders vorteilhaft ist die Ausbildung eines Fahrzeugluftreifens gemäß den Merkmalen von Anspruch 4, wobei ζ mit (γ -15°)≤ζ ≤( γ -2°) - insbesondere mit (γ -10°)≤ζ ≤( γ -4°) - ausgebildet ist. Hiermit kann eine besonders gute Rollwiderstandsoptimierung umgesetzt werden.

Besonders vorteilhaft ist die Ausbildung eines Fahrzeugluftreifens gemäß den Merkmalen von Anspruch 5, wobei die zweite Gürtellage sich in axialer Richtung von einem die zweite Gürtellage zur einen Reifenschulter hin axial begrenzenden Lagenende bis zu einem die zweite Gürtellage zur anderen Reifenschulter hin axial begrenzenden Lagenende erstreckt, wobei der erste Schulterabdeckstreifen sich in axialer Richtung von einem den Schulterabdeckstreifen zur Reifenmitte hin axial begrenzenden Streifenende bis zu dem den Schulterabdeckstreifen zur Reifenschulter hin axial begrenzenden Streifenende erstreckt, wobei das zur Reifenschulter hin begrenzende Streifenende im axialen Abstand a₁ mit 10mm ≤ a₁ - insbesondere mit 5mm ≤ a₁ - von der zur gleichen Reifenschulter hin die zweite Gürtellage begrenzenden Lagenende angeordnet ist. Hierdurch kann eine Optimierung des Zielkonfliktes aus gutem Rollwiderstand und hoher Einsatztauglichkeit der Karkasse für die Runderneuerung einfach umgesetzt werden.

Besonders vorteilhaft ist die Ausbildung eines Fahrzeugluftreifens gemäß den Merkmalen von Anspruch 6, wobei die dritte Gürtellage sich in axialer Richtung von einem die dritte Gürtellage zur einen Reifenschulter hin axial begrenzenden Lagenende bis zu einem die dritte Gürtellage zur anderen Reifenschulter hin axial begrenzenden Lagenende erstreckt, wobei der zweite Schulterabdeckstreifen sich in axialer Richtung von einem den Schulterabdeckstreifen zur Reifenmitte hin axial begrenzenden Streifenende bis zu dem den Schulterabdeckstreifen zur Reifenschulter hin axial begrenzenden Streifenende erstreckt, wobei das zur Reifenschulter hin begrenzende Streifenende im axialen Abstand a₂ mit 5mm ≤ a₂ von der zur gleichen Reifenschulter hin die dritte Gürtellage begrenzenden Lagenende angeordnet ist. Hierdurch kann die Lösung des Zielkonfliktes aus gutem Rollwiderstand und hoher Einsatztauglichkeit der Karkasse für die Runderneuerung weiter optimiert werden.

Besonders vorteilhaft zur Erzielung einer Optimierung des Rollwiderstandes ist die Ausbildung eines Fahrzeugluftreifens gemäß den Merkmalen von Anspruch 7, wobei die Breite B₀, welche den axialen Abstand zwischen den die beiden Schulterstreifen jeweils zur axialen vom Reifen weg weisenden Rändern bildet, mit
(B/ B₀) ≤1,20 ausgebildet ist.

Besonders vorteilhaft zur Erzielung einer Optimierung des Rollwiderstandes ist die Ausbildung eines Fahrzeugluftreifens gemäß den Merkmalen von Anspruch 8, wobei die axiale Erstreckungsbreite jedes der beiden Schulterabdeckstreifen mit einer in axialer Richtung A gemessenen Breite von mindestens 50mm und von maximal 70mm ausgebildet ist.

Besonders vorteilhaft ist die Ausbildung eines Fahrzeugluftreifens gemäß den Merkmalen von Anspruch 9, wobei die Breite B₀ mit (Bₘₐₓ -155mm)≤ B₀≤ Bₘₐₓ ausgebildet ist, wobei Bₘₐₓ die in axialer Richtung A gemessene Breite der breitesten Gürtellage bildet. Hierdurch kann die Lösung des Zielkonfliktes aus gutem Rollwiderstand und hoher Einsatztauglichkeit der Karkasse für die Runderneuerung weiter optimiert werden.

Besonders vorteilhaft zur weiteren Optimierung des Rollwiderstandes ist die Ausbildung eines Fahrzeugluftreifens gemäß den Merkmalen von Anspruch 10, wobei das Verhältnis B/ B₀ mit (B/ B₀) ≤1,10 - insbesondere mit (B/ B₀) ≤1,00 - ausgebildet ist.

Besonders vorteilhaft ist die Ausbildung eines Fahrzeugluftreifens gemäß den Merkmalen von Anspruch 11, wobei das Verhältnis B/ B₀ mit (B/ B₀) ≤1,10 - insbesondere mit (B/ B₀) ≤1,00 - ausgebildet ist. Diese Ausbildung ermöglicht eine weitere Optimierung des Rollwiderstandes.

Besonders vorteilhaft ist die Ausbildung eines Fahrzeugluftreifens gemäß den Merkmalen von Anspruch 12, wobei β, γ,ε und ζ mit 22°≤β≤32° , mit 22°≤ γ ≤32°, mit 16°≤ε≤20° und mit 16°≤ζ≤20° ausgebildet sind. Diese Ausbildung ermöglicht eine optimierte Lösung des Zielkonfliktes aus gutem Rollwiderstand und guter Abriebsleistung.

Die Erfindung wird im Folgenden an Hand der in den Fig.1 bis Fig.3 dargestellten Ausführungsbeispiele eines Nutzfahrzeugluftreifens radialer Bauart erläutert. Darin zeigen
- Fig. 1: einen Teilquerschnitt durch die eine Hälfte eines Fahrzeugluftreifens im Bereich des Gürtels und Laufstreifens,
- Fig. 2: Teilquerschnitt durch die Gürtellagen in einer Ausführungsvariante und
- Fig. 3: eine Draufsicht auf die Gürtellagen von Fig. 2 .

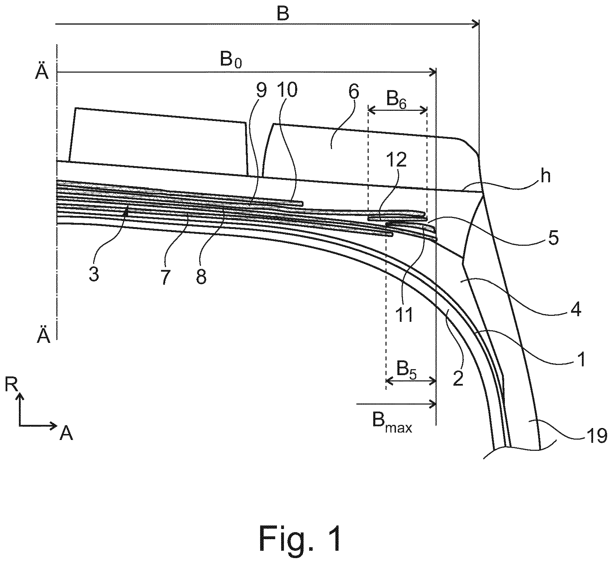

Fig. 1 zeigt einen Querschnitt durch den Laufstreifen und den Gürtelbereich eines Fahrzeugluftreifens für Lastkraftwagen oder Omnibus in einer üblichen Standardkonstruktion mit einer Karkasse 1 mit Stahlkorden als Festigkeitsträgern, mit einer luftdichten Innenschicht 2, mit einem mehrlagigen Gürtel 3, mit im Bereich der Gürtelkanten angeordneten Gummipolstern 4, 5 und mit einem profilierten Laufstreifen 6, sowie mit zwei Reifenseitenwänden 19, von denen in Fig.1 nur die rechte dargestellt ist.

Der Gürtel 3 weist vier Gürtellagen 7, 8, 9 und 10 auf, wobei die vierte, radial äußerste Gürtellage 10 die geringste in axialer Richtung A gemessene Breite von allen Lagen aufweist und die sogenannte Schutzlage bildet. Die erste Gürtellage 7 ist die sogenannte Sperrlage, die zweite Gürtellage 8 und die dritte Gürtellage 9 sind die sogenannten Arbeitslagen. Die breiteste Gürtellage ist die zweite Gürtellage 8, welche demnach die erste Gürtellage 7 komplett überdeckt. Die dritte Gürtellage 9 ist etwas breiter als oder gleich breit wie die erste Gürtellage 7. Sämtliche Gürtellagen 7, 8, 9, 10 bestehen aus in eine Gummimischung, der Gürtelgummierung, eingebetteten Festigkeitsträgern aus Stahlkord, beispielsweise der Konstruktion 3x0,2 mm + 6x0,35 mm. Es können in den Gürtellagen auch Stahlkorde anderer Konstruktionen verwendet werden.

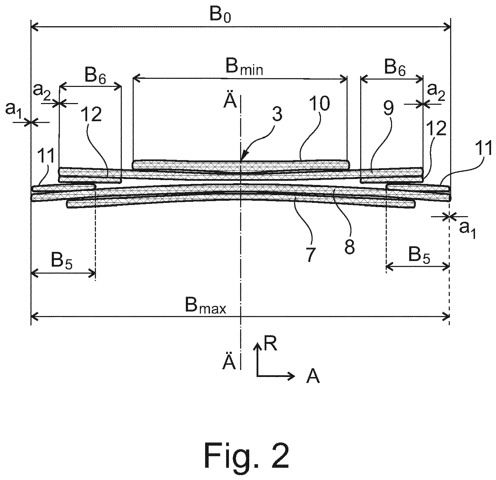

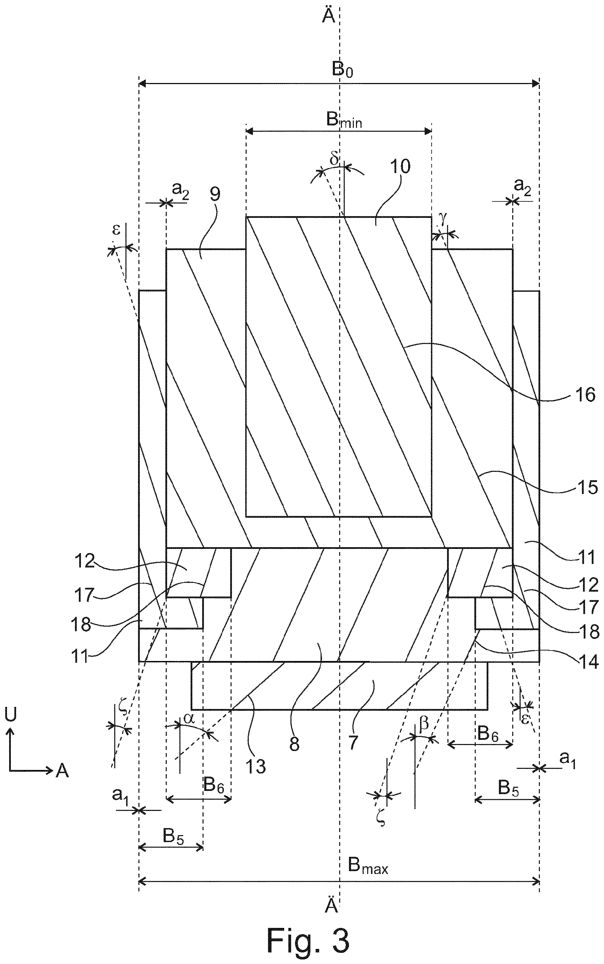

Wie Fig.2 und Fig.3 zeigt, verlaufen die Stahlkorde 13 der Lage 7, die Stahlkorde 14 der Lage 8, die Stahlkorde 15 der Lage 9 und die Stahlkorde 16 der Lage 10 innerhalb ihrer jeweiligen Lage 7, 8, 9 bzw. 10 parallel zueinander und schließen mit der durch die Linie Ä-Ä angedeuteten Umfangsrichtung (dem Reifenäquator) des Reifens bestimmte Winkel α, β, γ, δ ein. Gemäß der Erfindung sind die Stahlkorde 13, 14 in der ersten und der zweiten Gürtellage 7, 8 bezüglich der Umfangsrichtung nach rechts geneigt. Der Winkel α, den die Stahlkorde 13 der ersten Gürtellage 7 mit der Umfangsrichtung einschließen, beträgt zwischen 45° und 70°, der Winkel β, den die Stahlkorde 14 der zweiten Gürtellage 8 mit der Umfangsrichtung U einschließen, zwischen 15° und 32°. Die Stahlkorde 15 und 16 in der dritten und der vierten Gürtellage 8, 9 sind gegenüber dem Reifenäquator bzw. der Umfangsrichtung des Reifens in die andere Richtung, nach links geneigt und schließen Winkel γ und δ mit der Umfangsrichtung ein, wobei der Winkel γ von seiner Größe bzw. seinem Betrag zwischen 15° und 32° und der Winkel δ von seiner Größe bzw. seinem Betrag zwischen 15° und 32° gewählt wird.

In Figur 1 ist die Laufstreifenbreite B eingetragen, sowie die Gürtelbreite Bₘₐₓ, welche die maximale axiale Erstreckung des Gürtels angibt und der Breite der breitesten Gürtellage, hier der zweiten Gürtellage 8 entspricht. Die Laufflächenbreite B ist - wie beispielsweise in der DE102009044418A1 angegeben - die Breite, die über die beiden äußeren Kanten des Laufstreifens gemessen wird in der Höhe der Mitte der Profiltiefe des Laufstreifenprofils.

Wie in den Figuren dargestellt ist, ist axial beiderseits der schmalen vierten Gürtellage 10 jeweils ein Paar von in radialer Richtung aufeinander angeordneter Schulterabdeckstreifen 11 und 12 angeordnet. Der erste, radial innere Schulterabdeckstreifen 11 der in axialer Richtung gemessenen Breite B₅ mit 50mm ≤ B₅≤ 70mm ist radial außerhalb der zweiten Gürtellage 8 in Berührkontakt zur zweiten Gürtellage aufgebaut. Der erste Schulterabdeckstreifen 11 erstreckt sich in axialer Richtung von einem den Schulterabdeckstreifen 11 zur Reifenmitte hin axial begrenzenden Streifenende bis zu dem den Schulterabdeckstreifen11 zur Reifenschulter hin axial begrenzenden Streifenende. Das nach axial außen vom Reifen wegweisende Lagenende des Schulterabdeckstreifens ist jeweils in axialem Abstand a₁ mit 5mm ≤ a₁ von dem in dieser Schulter in axialer Richtung A vom Reifen wegweisend angeordneten Lagenende der zweiten Gürtellage 8 angeordnet. Im dargestellten Ausführungsbeispiel ist a₁= 0mm ausgebildet.

Der zweite, radial äußere Schulterabdeckstreifen 12 der in axialer Richtung gemessenen Breite B₆ mit 50mm ≤ B₆≤ 70mm ist radial außerhalb des ersten Schulterabdeckstreifens 11 in Berührkontakt zum ersten Schulterabdeckstreifen und radial innerhalb der dritten Gürtellage 9 in Berührkontakt zur dritten Gürtellage 9 aufgebaut. Der zweite Schulterabdeckstreifen 12 erstreckt sich in axialer Richtung von einem den Schulterabdeckstreifen 12 zur Reifenmitte hin axial begrenzenden Streifenende bis zu dem den Schulterabdeckstreifen 12 zur Reifenschulter hin axial begrenzenden Streifenende. Das nach axial außen vom Reifen wegweisende Lagenende des zweiten Schulterabdeckstreifens 12 ist in axialem Abstand a₂ mit 5mm ≤ a₂ von dem in dieser Schulter in axialer Richtung A vom Reifen wegweisend angeordneten Lagenende der dritten Gürtellage 9 angeordnet. Im dargestellten Ausführungsbeispiel ist a₂= 0mm ausgebildet.

Die aufeinander angeordneten Schulterabdeckstreifen 11 und 12 sind jeweils unter mit axialem Versatz zu einander angeordnet.

Im ersten Schulterabdeckstreifen 11 sind über den Umfang des Reifens verteilt parallele, in Kautschuk oder Gummi eingebettete Stahlkorde 17 angeordnet, welche sich über die Breite des Schulterabdeckstreifens 11 erstrecken. Im zweiten Schulterabdeckstreifen 12 sind über den Umfang des Reifens verteilt parallele, in Kautschuk oder Gummi eingebettete Stahlkorde 18 angeordnet, welche sich über die Breite des Schulterabdeckstreifens 12 erstrecken. Wie in Fig.3 dargestellt zeigt, verlaufen die Stahlkorde 17 des Schulterabdeckstreifens 11 und die Stahlkorde 18 des Schulterabdeckstreifens 12 innerhalb des jeweiligen Schulterabdeckstreifens 11 bzw. 12 parallel zueinander und schließen mit der durch die Linie Ä-Ä angedeuteten Umfangsrichtung (dem Reifenäquator) des Reifens bestimmte Winkel ε, ζ ein. Gemäß der Erfindung sind die Stahlkorde 17 im ersten Schulterabdeckstreifen 11 bezüglich der Umfangsrichtung nach links geneigt und somit in einer Kreuzanordnung zu den Stahlkorden 14 der zweiten Gürtellage 8. Der Winkel ε, den die Stahlkorde 17 mit der Umfangsrichtung einschließen, ist mit (β-15°)≤ε≤(β-2°) - insbesondere mit (β-10°)≤ε≤(β-4°) - gewählt.

Die Stahlkorde 18 im zweiten Schulterabdeckstreifen 12 sind bezüglich der Umfangsrichtung nach rechts geneigt und somit in einer Kreuzanordnung zu den Stahlkorden 17 des ersten Schulterabdeckstreifens 11 und den Stahlkorden15 der dritten Gürtellage 9. Der Winkel ζ, den die Stahlkorde 18 mit der Umfangsrichtung einschließen, ist mit (γ -15°)≤ζ ≤( γ -2°) - insbesondere mit (γ -10°)≤ζ ≤( γ -4°) - gewählt ausgebildet.

Die Winkel β, γ, ε und ζ sind in einer besonderen Ausführung mit 22°≤β≤32°, mit 22°≤ γ ≤32°, mit 16°≤ε≤20° und mit 16°≤ζ≤20° gewählt ausgebildet.

Beispielsweise ist α=50°, β=26°, γ =26°, δ=18° ε=18° und ζ =18° gewählt.

In Figur 3 sind zur anschaulicheren Darstellung in jeder Lage in vereinfachter Weise lediglich einzelne, wenige Stahlkorde 13,14,15,16,17 und 18 jeweils mit vergrößertem Abstand zueinander dargestellt.

Der in axialer Richtung A gemessene Abstand B₀ zwischen den die beiden Schulterabdeckstreifen 11 jeweils in axialer Richtung A nach außen hin begrenzenden - d.h. vom Reifen wegweisenden - Lagenenden ist mit (Bₘₐₓ -155mm)≤ B₀≤ Bₘₐₓ ausgebildet.

Die Schulterstreifen 11 sind so im Reifen angeordnet, dass das Verhältnis (B/ B₀) ≤1,20 ist. Im dargestellten Ausführungsbeispiel ist (B/ B₀) ≤1,10. In besonders abriebgefährdeten Nutzfahrzeugreifen wird das Verhältnis mit (B/ B₀) ≤1,0 gewählt.

Die Stahlkorde 17 und 18 sind beispielsweise Stahlkorde des Typs 3x0,2 mm + 6x0,35 mm. Es können auch Stahlkorde anderer Konstruktionen verwendet werden.

In den oben beschriebenen Ausführungsbeispielen sind die Stahlkorde 16 der vierten Lage 10 nach rechts geneigt ausgebildet. In anderer, nicht dargestellter Ausführung sind die Stahlkorde 16 der vierten Lage 10 nach links geneigt ausgebildet.

Der Laufstreifen ist mit einem geeigneten Laufstreifenprofil mit einem Rillenleervolumen (Void) von maximal 10% ausgebildet. Dies wird im Folgenden erläutert. Parallel zur axialen Außenkontur der Laufstreifenperipherie ist in Fig. 1 eine Hilfslinie h eingezeichnet, welche die Umfangsrillen an ihren radial inneren Enden berührt und derart im Querschnitt eine parallel zur Laufstreifenperipherie in Umfangsrichtung innerhalb des Laufstreifens 1 umlaufende Einhüllende versinnbildlicht. Die durch Hilfslinie h versinnbildlichte Einhüllende, die Laufstreifenperipherie und die schulterseitigen Flankenabschnitte des Laufstreifens 6 umschließen ein Bruttovolumen V, welches die Summe des hier befindlichen Gummivolumens und des Rillenleervolumens V_{R} ist, welches seinerseits die Summe der "Luftvolumina" sämtlicher Umfangsrillen -zwischen den Rillenbegrenzungen und einer Einhüllenden der Laufstreifenperipherie ermittelt- ist. Bei dem Reifen beträgt der Anteil des Rillenleervolumens V_{R} am Bruttovolumen V maximal 10%.

### Bezugszeichenliste

### (Teil der Beschreibung)

- 1: Karkasse
- 2: Innenschicht
- 3: Gürtel
- 4: Gummipolster
- 5: Gummipolster
- 6: Laufstreifen
- 7: Gürtellage
- 8: Gürtellage
- 9: Gürtellage
- 10: Gürtellage
- 11: Gürtelabdeckstreifen
- 12: Gürtelabdeckstreifen
- 13: Stahlkord
- 14: Stahlkord
- 15: Stahlkord
- 16: Stahlkord
- 17: Stahlkord
- 18: Stahlkord
- 19: Reifenseitenwand

## Patentansprüche

1. Fahrzeugluftreifen in Radialbauart für Lastkraftwagen oder Omnibusse mit einem wenigstens vierlagigen Gürtel (3), wobei jede Gürtellage (7, 8, 9, 10) als Festigkeitsträger Stahlcorde enthält, die in jeder Gürtellage (7, 8, 9, 10) jeweils parallel zueinander verlaufen, wobei die Neigung der Stahlcorde zur Umfangsrichtung (A-A) beginnend bei der ersten, radial innersten Gürtellage (7), der Abfolge Rechts-Rechts-Links-Rechts oder Rechts-Rechts-Links-Links folgt und der Winkel (α), den die Stahlcorde (13) in der ersten Gürtellage (7) mit der Umfangsrichtung (A-A) einschließen, zwischen 45° und 70° beträgt, die Winkel (β, γ), welche die Stahlcorde (14,15) in der zweiten Gürtellage (8) und in der dritten Gürtellage (9) mit der Umfangsrichtung (A-A) einschließen, jeweils zwischen 15° und 32° betragen, die Winkel (δ), welche die Stahlcorde (16) in der vierten Gürtellage (10) mit der Umfangsrichtung (A-A) einschließen, zwischen 15° und 32° betragen, wobei die vierte Gürtellage (10) schmaler ausgebildet ist als die anderen drei Gürtellagen (7,8,9), und mit einem radial außerhalb des Gürtels (3) ausgebildeten Laufstreifen (6) mit einer in axialer Richtung A gemessenen Laufstreifenbreite B,
**dadurch gekennzeichnet,**
**dass** zwischen zweiter (8) und dritter (9) Gürtellage beiderseits in einer axialen Position außerhalb des axialen Erstreckungsbereichs der vierten Gürtellage (10) jeweils zwei in radialer Richtung mit Berührkontakt zueinander übereinander angeordnete Schulterabdeckstreifen (11,12) angeordnet sind, in denen jeweils als Festigkeitsträger Stahlkorde (17,18) parallel zu einander verlaufen, wobei die Stahlkorde (17) des einen Schulterabdeckstreifen (11) zu denen des anderen Schulterabdeckstreifen (12) sowie zu den Stahlkorden (14) der unmittelbar radial benachbarten Gürtellage (8) in Kreuzanordnung verlaufend angeordnet sind und wobei die Stahlkorde (17) des ersten, radial inneren Schulterabdeckstreifens (11) mit der Umfangsrichtung einen Winkel ε und die Stahlkorde (18) des zweiten, radial äußeren Schulterabdeckstreifens (12) einen Winkel ζ einschließen mit ε<β und mit ζ<γ.

2. Fahrzeugluftreifen gemäß den Merkmalen von Anspruch 1,
wobei die beiden Schulterabdeckstreifen (11,12) mit axialem Versatz zu einander angeordnet sind.

3. Fahrzeugluftreifen gemäß den Merkmalen von Anspruch 1 oder 2,
wobei ε mit (β-15°)≤ε≤(β-2°) - insbesondere mit (β-10°)≤ε≤(β-4°) - ausgebildet ist.

4. Fahrzeugluftreifen gemäß den Merkmalen von einem der vorangegangenen Ansprüche,
wobei ζ mit (γ -15°)≤ζ ≤( γ -2°) - insbesondere mit (γ -10°)≤ζ ≤( γ -4°) - ausgebildet ist.

5. Fahrzeugluftreifen gemäß den Merkmalen von einem der vorangegangenen Ansprüche,
wobei die zweite Gürtellage (8) sich in axialer Richtung von einem die zweite Gürtellage (8) zur einen Reifenschulter hin axial begrenzenden Lagenende bis zu einem die zweite Gürtellage (8) zur anderen Reifenschulter hin axial begrenzenden Lagenende erstreckt, wobei der erste Schulterabdeckstreifen (11) sich in axialer Richtung von einem den Schulterabdeckstreifen zur Reifenmitte hin axial begrenzenden Streifenende bis zu dem den Schulterabdeckstreifen (11) zur Reifenschulter hin axial begrenzenden Streifenende erstreckt, wobei das zur Reifenschulter hin begrenzende Streifenende im axialen Abstand a₁ mit 10mm ≤ a₁ - insbesondere mit 5mm ≤ a₁ - von der zur gleichen Reifenschulter hin die zweite Gürtellage (8) begrenzenden Lagenende angeordnet ist.

6. Fahrzeugluftreifen gemäß den Merkmalen von einem der vorangegangenen Ansprüche,
wobei die dritte Gürtellage (9) sich in axialer Richtung von einem die dritte Gürtellage (9) zur einen Reifenschulter hin axial begrenzenden Lagenende bis zu einem die dritte Gürtellage (9) zur anderen Reifenschulter hin axial begrenzenden Lagenende erstreckt, wobei der zweite Schulterabdeckstreifen (12) sich in axialer Richtung von einem den Schulterabdeckstreifen (12) zur Reifenmitte hin axial begrenzenden Streifenende bis zu dem den Schulterabdeckstreifen (12) zur Reifenschulter hin axial begrenzenden Streifenende erstreckt, wobei das zur Reifenschulter hin begrenzende Streifenende im axialen Abstand a₂ mit 5mm ≤ a₂ von der zur gleichen Reifenschulter hin die dritte Gürtellage (9) begrenzenden Lagenende angeordnet ist.

7. Fahrzeugluftreifen gemäß den Merkmalen von einem der vorangegangenen Ansprüche,
wobei die Breite B₀, welche den axialen Abstand zwischen den die beiden Schulterstreifen (11,12) jeweils zur axialen vom Reifen weg weisenden Rändern bildet, mit (B/ B₀) ≤1,20 ausgebildet ist.

8. Fahrzeugluftreifen gemäß den Merkmalen von Anspruch 1,
wobei die axiale Erstreckungsbreite jedes der beiden Schulterabdeckstreifen (11,12) mit einer in axialer Richtung A gemessenen Breite von mindestens 50mm und maximal 70mm ausgebildet ist.

9. Fahrzeugluftreifen gemäß den Merkmalen von einem der vorangegangenen Ansprüche,
wobei die Breite B₀ mit (Bₘₐₓ -155mm)≤ B₀≤ Bₘₐₓ ausgebildet ist, wobei Bₘₐₓ die in axialer Richtung A gemessene Breite der breitesten Gürtellage (8) bildet.

10. Fahrzeugluftreifen gemäß den Merkmalen von einem der vorangegangenen Ansprüche,
wobei das Laufstreifenprofil mit einem Rillenleervolumen (Void) von maximal 10% ausgebildet ist.

11. Fahrzeugluftreifen gemäß den Merkmalen von Anspruch 7,
wobei das Verhältnis B/ B₀ mit (B/ B₀) ≤1,10 - insbesondere mit (B/ B₀) ≤1,00 - ausgebildet ist.

12. Fahrzeugluftreifen gemäß den Merkmalen von einem der vorangegangenen Ansprüche,
wobei β, γ, ε und ζ mit 22°≤β≤32° , mit 22°≤ γ ≤32°, mit 16°≤ε≤20° und mit 16°≤ζ≤20° ausgebildet sind.

## Claims

1. Pneumatic vehicle tyre of radial type of construction for heavy goods vehicles or buses, having a belt (3) which has at least four plies, wherein each belt ply (7, 8, 9, 10) comprises steel cords as strengthening members, which steel cords run in each case parallel to one another in each belt ply (7, 8, 9, 10), wherein the inclination of the steel cords with respect to the circumferential direction (A-A), proceeding from the first, radially innermost belt ply (7), follows the sequence right-right-left-right or right-right-left-left, and the angle (α) enclosed by the steel cords (13) in the first belt ply (7) with the circumferential direction (A-A) amounts to between 45° and 70°, the angles (β, γ) enclosed by the steel cords (14, 15) in the second belt ply (8) and in the third belt ply (9) with the circumferential direction (A-A) amount to in each case between 15° and 32°, and the angle (δ) enclosed by the steel cords (16) in the fourth belt ply (10) with the circumferential direction (A-A) amounts to between 15° and 32°, wherein the fourth belt ply (10) is of narrower form than the other three belt plies (7, 8, 9), and having a tread (6), formed radially outside the belt (3), with a tread width B measured in the axial direction A,
**characterized**
**in that**, between second (8) and third (9) belt ply, on both sides in an axial position outside the axial region of extent of the fourth belt ply (10), there are arranged in each case two shoulder cover strips (11, 12) which are arranged one above the other so as to be in contact with one another in a radial direction and in each of which, as strengthening members, steel cords (17, 18) run parallel to one another, wherein the steel cords (17) of one shoulder cover strip (11) are arranged so as to run in a criss-crossing arrangement with respect to those of the other shoulder cover strip (12) and with respect to the steel cords (14) of the immediately radially adjacent belt ply (8), and wherein the steel cords (17) of the first, radially inner shoulder cover strip (11) enclose an angle ε with the circumferential direction, and the steel cords (18) of the second, radially outer shoulder cover strip (12) enclose an angle ζ, where ε<β and ζ<γ.

2. Pneumatic vehicle tyre according to the features of Claim 1,
wherein the two shoulder cover strips (11, 12) are arranged with an axial offset with respect to one another.

3. Pneumatic vehicle tyre according to the features of Claim 1 or 2,
wherein ε is dimensioned such that (β-15°)≤ε≤(β-2°), in particular (β-10°)≤ε≤(β-4°).

4. Pneumatic vehicle tyre according to the features of one of the preceding claims,
wherein ζ is dimensioned such that (γ-15°)≤ζ≤(γ-2°), in particular (γ-10°)≤ζ≤(γ-4°).

5. Pneumatic vehicle tyre according to the features of one of the preceding claims,
wherein the second belt ply (8) extends in an axial direction from a ply end which axially delimits the second belt ply (8) toward one tyre shoulder to a ply end which axially delimits the second belt ply (8) toward the other tyre shoulder, wherein the first shoulder cover strip (11) extends in an axial direction from a strip end which axially delimits the shoulder cover strip toward the tyre centre to the strip end which axially delimits the shoulder cover strip (11) toward the tyre shoulder, wherein the strip end which delimits toward the tyre shoulder is arranged with an axial spacing a₁ of 10 mm ≤ a₁ - in particular 5 mm ≤ a₁ - to the ply end which delimits the second belt ply (8) toward the same tyre shoulder.

6. Pneumatic vehicle tyre according to the features of one of the preceding claims,
wherein the third belt ply (9) extends in an axial direction from a ply end which axially delimits the third belt ply (9) toward one tyre shoulder to a ply end which axially delimits the third belt ply (9) toward the other tyre shoulder, wherein the second shoulder cover strip (12) extends in an axial direction from a strip end which axially delimits the shoulder cover strip (12) toward the tyre centre to the strip end which axially delimits the shoulder cover strip (12) toward the tyre shoulder, wherein the strip end which delimits toward the tyre shoulder is arranged with an axial spacing a₂ of 5 mm ≤ a₂ to the ply end which delimits the third belt ply (9) toward the same tyre shoulder.

7. Pneumatic vehicle tyre according to the features of one of the preceding claims,
wherein the width Bo which forms the axial spacing between the two shoulder strips (11, 12) and the
respective edges pointing axially away from the tyre is dimensioned such that (B/B₀)≤1.20.

8. Pneumatic vehicle tyre according to the features of Claim 1,
wherein the axial extent width of each of the two shoulder cover strips (11, 12) is dimensioned with a width, measured in the axial direction A, of at least 50 mm and at most 70 mm.

9. Pneumatic vehicle tyre according to the features of one of the preceding claims,
wherein the width B₀ is dimensioned such that (Bₘₐₓ - 15 mm)≤B₀≤Bₘₐₓ, wherein Bₘₐₓ forms the width, measured in the axial direction A, of the widest. belt ply (8).

10. Pneumatic vehicle tyre according to the features of one of the preceding claims,
wherein the tread profile is formed with a channel void volume (Void) of at most 10%.

11. Pneumatic vehicle tyre according to the features of Claim 7,
wherein the ratio (B/B₀) is dimensioned such that (B/B₀)≤1.10, in particular (B/B₀)≤1.00.

12. Pneumatic vehicle tyre according to the features of one of the preceding claims,
wherein β, γ, ε and ζ are dimensioned such that 22°≤β≤32°, 22°≤γ≤ 32°, 16°≤ε≤20° and 16°≤ζ≤20°.

## Revendications

1. Bandage pneumatique pour roue de véhicule à structure radiale, pour véhicules utilitaires ou autobus,
présentant une ceinture (3) formée d'au moins quatre couches,
chaque couche (7, 8, 9, 10) de ceinture contenant comme renforts des câbles d'acier qui s'étendent parallèlement les uns aux autres dans chaque couche de ceinture (7, 8, 9, 10),
l'inclinaison des câbles d'acier par rapport à la direction périphérique (A-A), en commençant par la première couche (7) située radialement le plus à l'intérieur suivant la succession droite-droite-gauche-droite ou droite-droite-gauche-gauche et l'angle (α) que les câbles d'acier (13) forment avec la direction périphérique (A-A) dans la première couche de ceinture (7) étant compris entre 45° et 70°,
les angles (β,γ) que les câbles d'acier (14, 15) forment dans la deuxième couche de ceinture (8) et dans la troisième couche de ceinture (9) avec la direction périphérique (A-A) étant chaque fois compris entre 15° et 32°,
l'angle (δ) que les câbles d'acier (16) de la quatrième couche de ceinture (10) forment avec la direction périphérique (A-A) étant compris entre 15° et 32°,
la quatrième couche de ceinture (10) étant plus étroite que les trois autres couches de ceinture (7, 8, 9),
une bande de roulement (6) étant formée radialement à l'extérieur de la ceinture (3) et présentant une largeur B de bande de roulement dans la direction axiale A,
**caractérisé en ce que**
deux rubans (11, 12) de recouvrement d'épaulement en contact dans la direction radiale sont disposés l'un au-dessus de l'autre entre la deuxième couche de ceinture (8) et la troisième couche de ceinture (9), des deux côtés situés axialement à l'extérieur de la plage d'extension axiale de la quatrième couche de ceinture (10),
**en ce que** des câbles d'acier (17, 18) s'étendent parallèlement l'un à l'autre en tant que renforts dans ces rubans,
**en ce que** les câbles d'acier (17) de l'un des rubans (11) de recouvrement d'épaulement s'étendent en croix par rapport à ceux de l'autre ruban (12) de recouvrement d'épaulement ainsi que par rapport aux câbles d'acier (14) de la couche de ceinture (8) immédiatement voisine dans la direction radiale,
**en ce que** les câbles d'acier (17) du premier ruban (11) de recouvrement d'épaulement, situés radialement à l'intérieur, forment avec la direction périphérique un angles ε et les câbles d'acier (18) du deuxième ruban (12) de recouvrement d'épaulement, situés radialement à l'extérieur, forment un angle ζ, avec ε < β et ζ < γ.

2. Bandage pneumatique pour roue de véhicule selon les caractéristiques de la revendication 1, dans lequel les deux rubans (11, 12) de recouvrement d'épaulement sont décalés axialement l'un par rapport à l'autre.

3. Bandage pneumatique pour roue de véhicule selon les caractéristiques des revendications 1 ou 2, dans lequel ε vérifie (β-15°)≤ ε ≤(β-2°) et en particulier (β-10°)≤ ε ≤(β-4°).

4. Bandage pneumatique pour roue de véhicule selon les caractéristiques de l'une des revendications précédentes, dans lequel ζ vérifie (γ-15°)≤ζ ≤(γ-2°) et en particulier (γ-10°)≤ζ ≤(γ-4°).

5. Bandage pneumatique pour roue de véhicule selon les caractéristiques de l'une des revendications précédentes, dans lequel la deuxième couche de ceinture (8) s'étend dans la direction axiale depuis une extrémité qui délimite axialement la deuxième couche de ceinture (8) en direction d'un épaulement du bandage de roue jusqu'à une extrémité qui délimite axialement la deuxième couche de ceinture (8) vers l'autre épaulement du bandage de roue, le premier ruban (11) de recouvrement d'épaulement s'étendant dans la direction axiale depuis une extrémité qui délimite axialement le ruban de recouvrement d'épaulement en direction du milieu du bandage de roue et une extrémité qui délimite axialement le ruban (11) de recouvrement d'épaulement en direction de l'épaulement du bandage de roue, l'extrémité du ruban adjacente à l'épaulement du bandage de roue étant disposée à une distance a₁ telle que 10 mm ≤ a₁ et en particulier 5 mm ≤ a₁ de l'extrémité qui délimite la deuxième couche de ceinture (8) en direction du même épaulement du bandage de roue.

6. Bandage pneumatique pour roue de véhicule selon les caractéristiques de l'une des revendications précédentes, dans lequel la troisième couche de ceinture (9) s'étend dans la direction axiale depuis une extrémité qui délimite axialement la troisième couche de ceinture (9) en direction d'un épaulement du bandage de roue jusqu'à une extrémité qui délimite axialement la troisième couche de ceinture (9) vers l'autre épaulement du bandage de roue, le deuxième ruban (12) de recouvrement d'épaulement s'étendant dans la direction axiale depuis une extrémité qui délimite axialement le ruban (12) de recouvrement d'épaulement en direction du milieu du bandage de roue et une extrémité qui délimite axialement le ruban (12) de recouvrement d'épaulement en direction de l'épaulement du bandage de roue, l'extrémité du ruban adjacente à l'épaulement du bandage de roue étant disposée à une distance a₂ telle que 5 mm ≤ a₂ de l'extrémité qui délimite la troisième couche de ceinture (9) en direction du même épaulement du bandage de roue.

7. Bandage pneumatique pour roue de véhicule selon les caractéristiques de l'une des revendications précédentes, dans lequel la largeur B₀ qui forme la distance axiale entre les bords axiaux des deux rubans d'épaulement (11, 12) et non tournés vers le bandage de roue vérifie la relation (B/B₀)≤ 1,20.

8. Bandage pneumatique pour roue de véhicule selon les caractéristiques de la revendication 1, dans lequel la largeur axiale de l'extension de chacun des deux rubans (11, 12) de recouvrement d'épaulement présente une largeur, mesurée dans la direction axiale A, d'au moins 50 mm et d'au plus 70 mm.

9. Bandage pneumatique pour roue de véhicule selon les caractéristiques de l'une des revendications précédentes, dans lequel la largeur B₀ vérifie la relation (Bₘₐₓ-15 mm)≤ B₀ ≤ Bₘₐₓ, Bₘₐₓ étant la largeur de la couche de ceinture (8) la plus large, mesurée dans la direction axiale A.

10. Bandage pneumatique pour roue de véhicule selon les caractéristiques de l'une des revendications précédentes, dans lequel le profil de bande de roulement présente un volume vide de rainure ("Void") d'au plus 10 %.

11. Bandage pneumatique pour roue de véhicule selon les caractéristiques de la revendication 7, dans lequel le rapport B/B₀ vérifie (B/B₀) ≤ 1,10, en particulier (B/B₀) ≤ 1,00.

12. Bandage pneumatique pour roue de véhicule selon les caractéristiques de l'une des revendications précédentes, dans lequel β, γ, ε, et ζ vérifient les relations 22°≤ β ≤32°, 22°≤ γ ≤32°, 16°≤ ε ≤20° et 16°≤ ζ≤20°.
